# EUROPEAN PATENT SPECIFICATION

(11) **EP 0 809 798 B1**
(45) Date of publication and mention of the grant of the patent: **29.03.2006**
(21) Application number: 96908448.2
(22) Date of filing: 30.01.1996
(51) Int. Cl.: B24B 37/00, B24B 49/00, H01L 21/00

(54) **METHOD FOR POLISHING A WAFER AND METHOD FOR MANUFACTURING AN INTEGRATED CIRCUIT**
VERFAHREN ZUM POLIEREN EINES WAFERS UND VERFAHREN ZUR HERSTELLUNG EINES INTEGRIERTEN SCHALTKREISES
PROCEDE POUR POLIR UNE PLAQUETTE DE SILICIUM ET PROCEDE POUR FABRIQUER UN CIRCUIT INTEGRE

(30) Priority: 09.02.1995 US 386023
(43) Date of publication of application: 03.12.1997
(73) Proprietor: MICRON TECHNOLOGY, INC., Boise, ID 83706-9632 (US)
(72) Inventor: MEIKLE, Scott, G., Boise, ID 83712 (US); HUDSON, Guy, F., Boise, ID 83705 (US)
(74) Representative: Hackney, Nigel John
(86) International application number: PCT/US1996/001027
(87) International publication number: WO 1996/024839

(56) References cited:
- US-A- 5 081 796
- US-A- 5 483 568
- IBM TECHNICAL DISCLOSURE BULLETIN, vol. 21, no. 4, September 1978, NEW YORK, US, page 1433 XP002009653 ANONYMOUS: "Selective Staining Method for Studying Polishing Pads. September 1978."
- MATER. RES. SOC. SYMP. PROC., vol. 260, 27 April 1992, PITTSBURGH, PA, USA, pages 53-64, XP000577620 S. SIVARAM ET AL.: "chemical mechanical polishing of interlevel dielectrics: models for emoval rate and planarity"
- MAT.REX.SOC.SYMP.PROC., vol. 337, 4 April 1994, PITTSBURGH, PA, USA, pages 121-131, XP000563165 R. JAIRATH ET AL.: "consumables for the chemical mechanical polishing (CMP) of dielectrics and conductors"
- MAT. RES. SOC. SYMP. PROC. , vol. 337, 4 April 1994, PITTSBURGH, PA, USA, pages 637-644, XP000577630 RAJEEV BAJAJ: "effect of polishing pad material properties on chemical mechanical polishing (CMP) processes"

## Description

This invention relates to the use of chemical mechanical planarization (CMP) in the manufacture of semiconductor integrated circuits and more particularly to prediction of performance characteristics of polyurethane pads used for CMP of semiconductor wafers.

During fabrication of integrated circuits, it is often desirable to planarize and/or polish the surface of a semiconductor wafer. One method of performing these tasks is referred to as chemical mechanical planarization (CMP). In general, the CMP process involves rotation or random movement of a wafer on a polishing pad in the presence of a polishing slurry. The polishing pad is typically formed of a polyurethane material.

Downward pressure on the wafer against the pad, rotational speed of the wafer and the pad, slurry content and pad characteristics determine the rate at which material is removed the from the surface of the wafer, and the uniformity of the resulting wafer surface.

Determination of how long a wafer should be planarized or polished has proven to be a difficult task. An apparatus and method for in-situ measurement of the thickness of a material to be planarized for CMP end point determination is described in U.S. Patent No. Re. 34,425 to Schultz.

Methods of controlling the pressure exerted on the wafer against the pad, rotational speed or random movement of the wafer on the pad and slurry composition are well known in the art. Condition and performance characteristics of the polyurethane pad are more difficult to determine. The ability of a pad to planarize the surface of a wafer varies substantially from pad to pad and over the life of an individuals pad.

After a wafer has been through the CMP process the pad will be conditioned to prepare it for another wafer. The conditioning process comprises a controlled abrasion of the polishing pad surface for the purpose of returning the pad to a state where is can sustain polishing. The ability of the conditioning process to return the pad to a state where it can efficiently planarize an additional wafer is dependent upon the pad itself and the conditioning parameters. After planarizing several hundred wafers, the pad may no longer be useful for planarizing wafers despite the conditioning process.

A method of staining polishing pads using a Rhodamine dye to delineate pad structure and detect contamination particles is disclosed in IBM Technical Disclosure Bulletin 21(4), 1433 (1978), which also states that the concentrations of 0.01% of the Rhodamine dye will fluoresce under ultraviolet light to provide a further means of pad structure delineation.

In Mat.Res.Soc.Symp.Proc. 260, 53-64 (1992) some of the problems limiting broad manufacturing implementation of CMP as a planarization process for interlevel dielectrics are reviewed. The authors propose an explanation for the observed decrease in polish rates as the polish pad ages, based on slurry transport.

In Mat.Res.Soc.Symp.Proc. 337, 637-644 (1994) the authors describe a study which attempts to correlate the intrinsic polymer properties and cellular structure of the pad material to CMP process indices like polishing rate and planarity. For example, the drop off in removal rate as a function of time can be attributed to the mechanical response of polyurethanes under conditions of critical shear.

The ability to predict a performance characteristics of new and used polyurethane pads would be a great benefit to users and manufacturers of such pads.

The present invention provides a method for polishing a wafer, a method for manufacturing an integrated circuit as defined in claims 1 and 5. For example, a measurement of a change in pad size following soaking in an organic solvent of a polyurethane pad manufactured for chemical mechanical planarization (CMP) of semiconductor wafers is used to predict performance characteristics of the pad, and to adjust polishing time.

After manufacturing a lot, one pad or a portion of a pad from the manufacturing lot may be soaked in an organic solvent which causes the pad material to swell. It is believed that the relative increase in size is indicative of chemical bonding of polymer chains within the pad. The increase in pad size is indicative of the performance characteristics of the pad. Statistical Process Control methods may be used to optimise the pad manufacturing process. A manufacturing lot may consist of any number of pads which are deemed to have been manufactured under conditions which tend to cause all pads within the lot to have very similar performance characteristics. Measurements of a change in size following soaking of the pad in organic solvent allow predicted pad characteristics to be available for each pad. The predicted performance characteristics may be used as a measure of quality of the pad, and may also be provided to pad end users.

Pad characteristic measurements may be taken before any wafers are planarized. Measurements may also be taken after each wafer is planarized or at intervals throughout the life of the pad. Repeated use of the pad impacts the polishing/planarizing ability of the pad. During the CMP process, polyurethane pads are often exposed to high pH (9.0 to 13.0) and high temperature (0 to 90C) environments. A correlation between pad swelling characteristics and pad performance has been noted in pads that have been exposed to such conditions. The predicted effect of conditioning can then be used to predict performance characteristics of the pad. The measurement of pad fluorescence characteristics also allows for worn or substandard pads to be replaced prior to wafer processing.

The features of the invention as well as objects and advantages will be best understood by reference to the appended claims, detailed description of particular embodiments and accompanying drawings where:

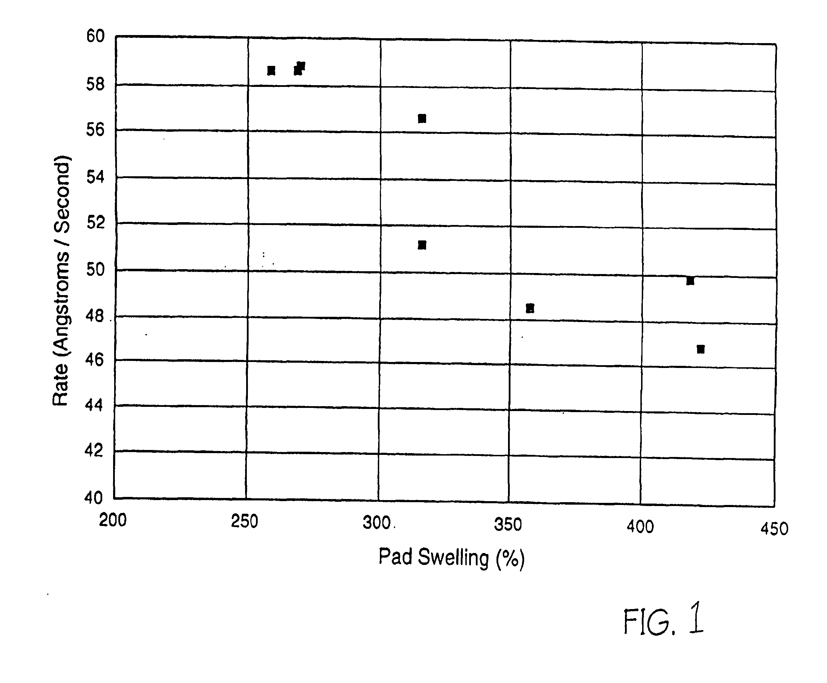

Fig. 1 is a plot of pad swelling versus wafer material removal rate.

Fig. 1 is a plot of the swelling of a portion of a CMP pad soaked in N-Methyl-2-pyrrolidone (NMP) for twenty-four hours versus the rate of planarization of a semiconductor device wafer which is planarized by the pad. Increases in swelling beyond twenty-four hours are not very large; however, longer or shorter periods of time may be used. The swelling measurement shown is a measurement of increase in pad area. The increase in pad volume, or simply the increase in length of a strip of pad material may also be used. Greater swelling indicates that the planarization rate will be lower. It is believed that other organic solvents such as MEK, MIBK, THF, Xylene and MeC12 may be used with similar results.

The plot of Fig. 1 shows that measurement of polyurethane pad swelling can be used to predict the planarization characteristics of the pad. The predicted planarization characteristics allow for a determination of planarization time in a CMP process. Predicted planarization characteristics of a CMP pad can also be used for process control and quality control in the manufacture of CMP pads. This data may be sent with the pads to CMP pad customers in the form of predicted planarization characteristics for particular CMP processes. The inventive method of measuring pad swelling characteristics may be used to perform incoming inspection on the pads. Substandard pads can be rejected before they are ever used.

## Claims

1. A method for polishing a wafer, comprising steps of:
soaking a polymer pad in an organic solvent; and measuring a change in size of the pad to obtain a measured value; and
polishing a wafer with the pad for a period of time which is dependent upon the measured value.

2. The method of claim 1, further comprising:
exposing the pad to a solution having a pH of between 9.0 and 13.0 prior to said step of measuring.

3. The method of claim 1 or claim 2, further comprising:
exposing the pad to a temperature of between 0°C and 90°C prior to said step of measuring.

4. The method of claim 1, further comprising:
conditioning the pad after polishing the wafer.

5. A method for manufacturing an integrated circuit, comprising:
forming a layer of material on a wafer substrate; **characterised in that** the method includes the step of:
polishing the wafer in a chemical mechanical planarization apparatus according to the method of any one of claims 1 to 4.

## Patentansprüche

1. Verfahren zum Polieren eines Wafers, folgende Schritte umfassend:
Tränken eines Polymerkissens in einem organischen Lösungsmittel; und Messen der Größenänderung des Kissens, um einen Messwert zu erhalten; und
Polieren eines Wafers mit dem Kissen über einen Zeitraum, der von dem Messwert abhängt.

2. Verfahren nach Anspruch 1, ferner Folgendes umfassend:
Aussetzen des Kissens gegenüber einer Lösung mit einem pH zwischen 9,0 und 13,0 vor dem Messschritt.

3. Verfahren nach Anspruch 1 oder Anspruch 2, ferner Folgendes umfassend:
Aussetzen des Kissens gegenüber einer Temperatur zwischen 0 °C und 90 °C vor dem Messschritt.

4. Verfahren nach Anspruch 1, ferner Folgendes umfassend:
Konditionieren des Kissens nach dem Polieren des Wafers.

5. Verfahren zur Herstellung eines integrierten Schaltkreises, umfassend:
das Ausbilden einer Schicht eines Materials auf einem Wafersubstrat; **dadurch gekennzeichnet, dass** das Verfahren folgenden Schritt umfasst:
Polieren des Wafers in einer chemisch-mechanischen Planarisierungsvorrichtung gemäß einem Verfahren nach einem der Ansprüche 1 bis 4.

## Revendications

1. Procédé de polissage d'une plaquette de silicium, comprenant les étapes consistant à :
tremper un tampon en polymère dans un solvant organique ; et mesurer u n changement de taille du tampon pour obtenir une valeur mesurée ; et
polir une plaquette de silicium avec le tampon pendant une période de temps qui est fonction de la valeur mesurée.

2. Procédé selon la revendication 1, comprenant en outre :
l'exposition du tampon à une solution ayant un pH compris entre 9,0 et 13,0 avant ladite étape de mesure.

3. Procédé selon la revendication 1 ou la revendication 2, comprenant en outre :
l'exposition du tampon à une température comprise entre 0°C et 90°C avant ladite étape de mesure.

4. Procédé selon la revendication 1, comprenant en outre :
le conditionnement du tampon après le polissage de la plaquette de silicium.

5. Procédé de fabrication d'un circuit intégré, comprenant :
la formation d'une couche de matériau sur un substrat de plaquette de silicium ; **caractérisé en ce que** le procédé comprend l'étape consistant à :
polir la plaquette de silicium dans un appareil de planarisation mécano-chimique selon le procédé de l'une quelconque des revendications 1 à 4.
